Europäisches Patentamt

European Patent Office

Office européen des brevets

(11) Veröffentlichungsnummer: **0 537 693 A1**

## (12) EUROPÄISCHE PATENTANMELDUNG

(21) Anmeldenummer: **92117488.4**

(22) Anmeldetag: **13.10.92**

(51) Int. Cl.⁵: **B62M 25/08**, B62M 11/16, F16H 61/32

(30) Priorität: **14.10.91 DE 4133962**

(43) Veröffentlichungstag der Anmeldung:
**21.04.93 Patentblatt 93/16**

(84) Benannte Vertragsstaaten:
**DE FR GB IT SE**

(71) Anmelder: **Fichtel & Sachs AG**
**Ernst-Sachs-Strasse 62**
**W-8720 Schweinfurt(DE)**

(72) Erfinder: **Lutz, Manfred, Dipl.-Ing. (FH)**
**Am Anger 1**
**W-8720 Schweinfurt(DE)**

(74) Vertreter: **Liska, Horst, Dr.-Ing. et al**
**Patentanwälte H. Weickmann,K. Fincke,F.A.**
**Weickmann, B. Huber,H. Liska,J. Prechtel,B.**
**Böhm, Kopernikusstrasse 9 Postfach 86 08**
**20**
**W-8000 München 86 (DE)**

(54) **Stellantrieb, insbesondere zum Schalten eines Fahrradantriebsgetriebes.**

(57) Insbesondere zum Schalten eines Fahrrad-Antriebsgetriebes wird ein Stellantrieb mit einem Elektromotor (3b) vorgeschlagen, der ein Abtriebsorgan (7b) über zwei Getriebestufen (13b, 15b) antreibt. Die beiden Getriebestufen (13b, 15b) haben ein gemeinsamens, auf einer Achse (11b) drehbares Sonnenrad (17b) und ein gemeinsames, relativ zum Sonnenrad (17b) drehbares Hohlrad (23b). Der Elektromotor (3b) treibt direkt ein mit dem Sonnenrad (17b) und dem Hohlrad (23b) kämmendes Antriebsrad (29b). Das Abtriebsorgan (7b) wird von einem Planetenradträger (37b) angetrieben, dessen Planetenräder (33b) ebenfalls sowohl mit dem Hohlrad (23b) als auch dem Sonnenrad (17b) kämmen. Der Teilkreisdurchmesser der Planetenräder (33b) ist bei entsprechender Anpassung der Teilkreisdurchmesser der Sonnenrad- oder Hohlradverzahnungen geringfügig größer als der Teilkreisdurchmesser des Antriebsrads (29b). Auf diese Weise läßt sich eine hohe Drehzahl des vorzugsweise als Gleichstrom-Kleinstmotor ausgebildeten Elektromotors (3b) mit sehr hohem Übersetzungsverhältnis ins Langsame übersetzen. Der Stellantrieb ist sehr kompakt und eignet sich insbesondere zum Einbau in eine Getriebe-Antriebsnabe eines Fahrrads vollständig innerhalb einer Nabenhülse (53) der Antriebsnabe.

Fig.3

EP 0 537 693 A1

Die Erfindung betrifft einen Stellantrieb, insbesondere zum Schalten eines Fahrrad-Antriebsgetriebes, und sie betrifft ferner eine Schaltgetriebe-Antriebsnabe für ein Zweiradfahrzeug.

Für sehr kleine Stellantriebe werden vielfach elektrische Kleinstmotoren benutzt, die jedoch normalerweise sehr hohe Betriebsdrehzahlen haben. Herkömmliche Stellantriebe haben deshalb vielstufige Stirnrad-Untersetzungsgetriebe und sind deshalb vergleichsweise aufwendig. Darüber hinaus benötigen vielstufige Stirnradgetriebe vergleichsweise viel Platz. Entsprechendes gilt für Schneckengetriebe mit hohem Untersetzungsverhältnis. Getriebe der vorstehenden Art haben darüber hinaus vielfach einen schlechten Wirkungsgrad.

Aus Dubbel "Taschenbuch des Maschinenbaus", Springer Verlag, Berlin, Heidelberg, New York, 15. Auflage, Seite 477 sind gegebenenfalls mehrstufige Planetengetriebe bekannt, die einen koaxialen Aufbau zulassen, bei welchen jedoch stets Antrieb und Abtrieb gleichachsig sind. Selbst mehrstufige Planetengetriebe haben jedoch normalerweise nur ein vergleichsweise niedriges Drehzahlübersetzungsverhältnis. Darüber hinaus sind herkömmliche Planetengetriebe aufgrund der Gleichachsigkeit von Antrieb und Abtrieb für eine Vielzahl Anwendungsfälle nicht einsetzbar. Soll der Stellantrieb auf einer zentrischen Achse oder Welle befestigt werden, wie dies zum Beispiel bei Schaltgetriebe-Antriebsnaben von Fahrrädern erwünscht wäre, so läßt sich ein Planetengetriebe herkömmlicher Bauart nicht ohne weiteres verwenden.

Es ist Aufgabe der Erfindung, einen sehr kompakten Stellantrieb zu schaffen, der selbst bei Verwendung von mit sehr hoher Drehzahl arbeitenden elektrischen Kleinstmotoren eine sehr geringe Ausgangsdrehzahl hat.

Der erfindungsgemäße Stellantrieb eignet sich insbesondere zum Schalten eines Fahrrad-Antriebsgetriebes, bei welchem es sich um eine Schaltgetriebe-Antriebsnabe aber auch um eine Kettenschaltung handeln kann, und ist gekennzeichnet durch

einen Elektromotor,

eine erste Getriebestufe mit einem um eine Drehachse drehbaren ersten Sonnenrad, einem zum ersten Sonnenrad koaxialen, um die Drehachse drehbaren ersten Hohlrad und einem von dem Elektromotor rotierend angetriebenen, mit dem ersten Sonnenrad und dem ersten Hohlrad kämmenden, stationär gelagerten Antriebsrad,

eine zweite Getriebestufe mit einem drehfest mit dem ersten Sonnenrad verbundenen und mit diesem um die Drehachse drehbaren zweiten Sonnenrad, einem drehfest mit dem ersten Hohlrad verbundenen und mit diesem um die Drehachse drehbaren, zum zweiten Sonnenrad koaxialen zweiten Hohlrad, einem relativ zum zweiten Sonnenrad und zum zweiten Hohlrad um die Drehachse drehbaren Planetenradträger und wenigstens einem drehbar an dem Planetenradträger gelagerten, mit dem zweiten Sonnenrad und dem zweiten Hohlrad kämmenden Planetenrad, dessen Teilkreisdurchmesser größer ist als der Teilkreisdurchmesser des Antriebsrads und

ein mit dem Planetenradträger verbundenes Abtriebsorgan.

Die zweite Getriebestufe bildet ein Planetenradgetriebe, und auch die erste Getriebestufe unterscheidet sich von einem Planetengetriebe nur dadurch, daß das einem Planetenrad vergleichbare Antriebsrad nicht um das Sonnenrad umläuft, sondern stationär gelagert ist. Da das Planetenrad der zweiten Getriebestufe einen größeren Teilkreisdurchmesser hat als das Antriebsrad der ersten Getriebestufe, wird die auf das Abtriebsorgan übertragene Abtriebsdrehzahl des Planetenradträgers, bezogen auf die Antriebsdrehzahl des Antriebsrads, sehr hoch ins Langsame untersetzt. Dies gilt insbesondere, wenn sich die Teilkreisdurchmesser nur sehr wenig unterscheiden, bei gleichen Zahnformen der Getriebestufen die Zähnezahlen des Antriebsrads und des Planetenrads sich also nur sehr wenig unterscheiden.

Der Elektromotor, bei dem es sich bevorzugt um einen Gleichstrommotor handelt, dessen Motorwelle direkt mit dem Antriebsrad verbunden sein kann, kann exzentrisch zur Drehachse der Hohlräder und der Sonnenräder angeordnet werden. Der erfindungsgemäße Stellantrieb eignet sich deshalb speziell für Anwendungen, bei welchen die Getriebestufen einschließlich des Elektromotors und des Abtriebsorgans auf einer die Drehachse definierenden zentralen Achse gelagert sind. Der koaxial montierte Elektromotor läßt sich auf diese Weise seitlich der ersten Getriebestufe innerhalb von deren radialer Kontur unterbringen. Es versteht sich, daß die zentrale Achse auch zur axialen Fixierung von Komponenten der Getriebestufen, insbesondere von deren Sonnenrädern und des Planetenradträgers, ausgenutzt werden kann.

In einer bevorzugten Ausgestaltung der Erfindung haben das erste und zweite Hohlrad gleichen Teilkreisdurchmesser, während der Teilkreisdurchmesser des zweiten Sonnenrads kleiner ist als der Teilkreisdurchmesser des ersten Sonnenrads. Bei gleicher Zahnform dieser Räder hat das zweite Sonnenrad bevorzugt eine nur wenig kleinere Zähnezahl als das erste Sonnenrad. Alternativ kann in einer Variante aber auch vorgesehen sein, daß das erste und zweite Sonnenrad gleichen Teilkreisdurchmesser haben, während der Teilkreisdurchmesser des ersten Hohlrads kleiner ist als der Teilkreisdurchmesser des zweiten Hohlrads. Bei gleicher Zahnform hat hier das erste Hohlrad bevorzugt eine nur wenig kleinere Zähnezahl als das zweite Hohlrad.

Bei den vorstehend erläuterten Varianten bilden das erste und zweite Hohlrad oder das erste und zweite Sonnenrad integral miteinander verbundene Stufenräder, die vorzugsweise als Sinter-Spritzguß-Formteile oder als Kunststoffformteile ausgebildet sind.

Für eine rotierende Stellbewegung kann unmittelbar die Drehbewegung des Planetenradträgers ausgenutzt werden. In einer zweckmäßigen Ausgestaltung der Erfindung ist jedoch das Abtriebsorgan als Gewindetrieb mit einem Spindelteil und einem mit dem Spindelteil verschraubbaren Mutterteil ausgebildet, wobei eines dieser Teile drehfest mit dem Planetenradträger verbunden ist und das andere der beiden Teile in Richtung der Drehachse verschiebbar ist. Der Gewindetrieb sorgt nicht nur für eine weitere Untersetzung bzw. Kraftverstärkung, sondern erlaubt es auch, die Drehbewegung des Planetenradträgers in eine translatorische Bewegung umzusetzen.

Insbesondere bei Verwendung von mit sehr hoher Drehzahl arbeitenden Gleichstrom-Kleinstmotoren genügt es aufgrund der hohen Untersetzung der beiden Getriebestufen, wenn der von einer Steuerschaltung vorzugsweise in beiden Drehrichtungen einschaltbare Elektromotor von Antriebsstromimpulsen exakt vorgegebener Dauer erregt wird, um den Stellantrieb in eine durch die Dauer des Antriebsstromimpulses festgelegte Stellposition zu bringen. Bei der Steuerschaltung kann es sich hierbei um ein simples Zeitglied handeln. Im Einzelfall erübrigen sich auf diese Weise Endschalter und dergleichen.

Der vorstehend erläuterte Stellantrieb eignet sich insbesondere als elektrisch steuerbarer Aktuator für eine Gangschaltung eines Fahrrads insbesondere in Form einer Nabenschaltung. Unter einem weiteren Aspekt betrifft die Erfindung ferner eine elektrisch steuerbare Schaltgetriebe-Antriebsnabe für ein Zweiradfahrzeug, insbesondere ein Fahrrad, umfassend
eine Achse,
eine drehbar an der Achse gelagerte Nabenhülse,
einen relativ zu Nabenhülse drehbar an der Achse gelagerten Antreiber,
eine im Antriebsweg zwischen dem Antreiber und der Nabenhülse angeordnete, mehrgängige Planetengetriebeanordnung, die mittels eines Steuerorgans zwischen wenigstens zwei Gängen umschaltbar ist.

Unter dem zweiten Aspekt der Erfindung ist an der Achse ein innerhalb der Nabenhülse angeordneter Stellantrieb gemäß dem vorstehend erläuterten ersten Aspekt der Erfindung gelagert, wobei das Abtriebsorgan des Stellantriebs mit dem Steuerorgan verbunden ist.

Die Drehbewegung des Planetenradträgers des Stellantriebs kann unmittelbar zur Steuerung der Planetengetriebeanordnung, beispielsweise zum Ein- und Ausschalten von Klinken eines Klinkengesperres mittels eines drehbaren Steuerrings oder dergleichen ausgenutzt werden. Das Steuerorgan der Planetengetriebeanordnung der Antriebsnabe kann jedoch auch längs der Achse beweglich sein, wie dies bei herkömmlichen Getriebenaben üblich ist, und der Planetenradträger kann mit dem Steuerorgan über einen Gewindetrieb gekuppelt sein. Die elektrischen Zuleitungen des Elektromotors werden zweckmäßigerweise über eine Längsbohrung der Achse aus der Nabenhülse herausgeführt.

Im folgenden wird die Erfindung anhand einer Zeichnung näher erläutert. Hierbei zeigt:

Fig. 1    eine schematische, teilweise geschnittene Darstellung einer ersten Ausführungsform eines Stellantriebs gemäß der Erfindung,

Fig. 2    eine Variante des Stellantriebs aus Fig. 1 und

Fig. 3    einen Axiallängsschnitt durch die obere Hälfte einer elektrisch steuerbaren Schaltgetriebe-Antriebsnabe für ein Fahrrad.

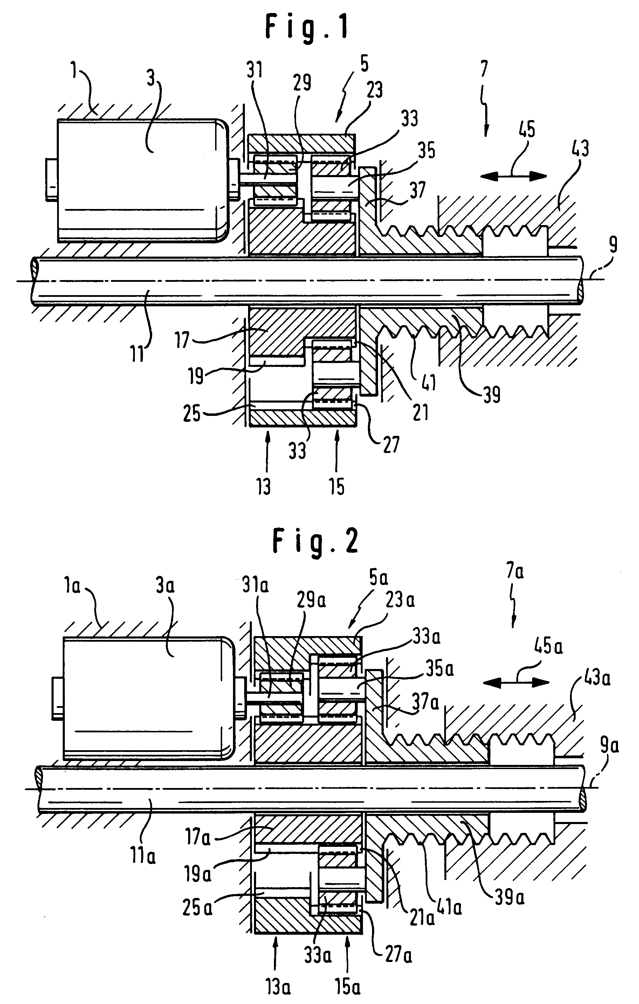

Fig. 1 zeigt einen Stellantrieb mit einem stationär an einem Basisteil 1 befestigten Elektromotor 3, insbesondere einem mit hoher Drehzahl arbeitenden Gleichstrom-Kleinstmotor, der über ein Getriebe 5 einen allgemein mit 7 bezeichneten Gewindetrieb antreibt. Das Getriebe 5 sitzt zusammen mit dem Spindeltrieb 7 auf einer zentralen, eine Drehachse 9 definierenden Achse 11, die ihrerseits drehfest mit der Basis 1 zu einer Einheit verbunden ist.

Das Getriebe 5 umfaßt zwei Getriebestufen 13, 15, die ähnlich Planetengetriebestufen aufgebaut sind und an einem gemeinsamen, an der Achse 11 drehbar gelagerten Sonnenrad 17 vorgesehene Sonnenradverzahnungen 19 bzw. 21 sowie an einem ebenfalls gemeinsamen, zum Sonnenrad 17 koaxialen und relativ zu diesem sowie der Achse 11 um die Drehachse 9 drehbaren Hohlrad 23 vorgesehene Hohlradverzahnungen 25 bzw. 27 umfassen. Mit der Sonnenradverzahnung 19 und der Hohlradverzahnung 25 der ersten Getriebestufe 13 kämmt ein Antriebsrad 29, das drehfest unmittelbar auf einer achsparallel zur Drehachse 9 verlaufenden Motorwelle 31 des neben der Achse 11 angeordneten Elektromotors 3 sitzt. Mit der Sonnenradverzahnung 21 und der Hohlradverzahnung 27 der zweiten Getriebestufe 15 kämmen mehrere Planetenräder 33, die drehbar am Achszapfen 35 eines auf der motorfernen Seite des Getriebes 5 angeordneten, drehbar auf der Achse 11 gelagerten Planetenradträgers 37 gelagert sind. Das Sonnenrad 17, das Hohlrad 23 und der Planetenradträger 37 sind in nicht im einzelnen dargestellter Weise entweder an der Achse 11 oder der Basis 1 axial fixiert, wobei das Hohlrad 23 entweder an den Planetenrädern 33 oder einem nicht näher dargestellten Lager der Basis 1 radial geführt ist.

Die Hohlradverzahnungen 25, 27 haben gleichen Teilkreisdurchmesser, während das Sonnenrad 17 als Stufenzahnrad ausgebildet ist, wobei die Sonnenradverzahnung 19 der motorseitigen Getriebestufe 13 einen etwas größeren Teilkreisdurchmesser hat als die Sonnenradverzahnung 21 der Getriebestufe 15. Dementsprechend hat auch das Antriebsrad 29 einen kleineren Teilkreisdurchmesser als jedes der gleich großen Planetenräder 33. Die Verzahnungen des Getriebes 5 haben sämtlich gleiche Zahnform, womit die Verhältnisse der Zähnezahlen den Verhältnissen der genannten Teilkreisdurchmesser entsprechen. Bei geringer Teilkreisdifferenz der Sonnenradverzahnungen 19, 21 und dementsprechend der Teilkreise des Antriebsrads 29 einerseits und der Planetenräder 33 andererseits ergibt sich entsprechend folgender Beziehung eine sehr hohe Getriebeübersetzung

$$\frac{n_{31}}{n_{37}} = \frac{2 \cdot (N_{21} + N_{33})}{N_{29} \left(\frac{N_{27}}{N_{25}} + \frac{N_{21}}{N_{19}}\right)}$$

Hierbei bedeutet n jeweils die Drehzahl und N die Zähnezahl, während der Index jeweils die Bezugszahl der vorstehend erläuterten Komponente bezeichnet.

Der Gewindetrieb 7 umfaßt ein mit dem Planetenradträger 37 verbundenes Spindelteil 39, auf dessen Außengewinde 41 eine Spindelmutter 43 geschraubt ist, die sich bei Drehantrieb des Getriebes 5 durch den Elektromotor 3 translatorisch längs der Achse 11, wie durch einen Doppelpfeil 45 angedeutet, bewegt.

Die Sonnenradverzahnungen 19, 21 wie auch die Hohlradverzahnungen 25, 27 können auf voneinander gesonderten, jedoch drehfest miteinander verbundenen Sonnen- bzw. Hohlrädern vorgesehen sein, was die Herstellung der Verzahnungen durch herkömmliche Techniken auch mit unterschiedlichen Zahnformen ermöglicht. Vorzugsweise sind jedoch die Verzahnungen integral an gemeinsamen Rädern vorgesehen, bei welchen es sich vorzugsweise um Sinter- oder Kunststoff-Gußformteile handelt.

Die vorstehend angegebene Beziehung zeigt, daß das Übersetzungsverhältnis in erster Linie durch das Verhältnis der Zahnzahlen bzw. der Teilkreisdurchmesser der beiden Sonnenradverzahnungsabschnitte und der beiden Hohlradverzahnungsabschnitte bestimmt wird.

Fig. 2 zeigt eine Variante des Stellantriebs aus Fig. 1, die sich von dem Stellantrieb der Fig. 1 lediglich dadurch unterscheidet, daß anstelle des Sonnenrads nunmehr das Hohlrad als Stufenzahnrad ausgebildet ist. Zur Erläuterung des Aufbaus und der Wirkungsweise wird auf die Beschreibung der Fig. 1 Bezug genommen, wobei entsprechende Komponenten durch die Bezugszahlen der Fig. 1 bezeichnet sind und zur Unterscheidung mit dem Buchstaben a versehen sind.

Wie Fig. 2 im einzelnen zeigt, hat der Hohlradverzahnungsabschnitt 25a der motorseitigen Getriebestufe 13a einen kleineren Teilkreisdurchmesser und damit eine kleinere Zähnezahl als der Hohlradverzahnungsabschnitt 27a der Getriebestufe 15a. Die Teilkreisdurchmesser und Zähnezahlen der Sonnenradverzahnungsabschnitte 19a und 21a sind gleich. Es versteht sich, daß entsprechend der vorstehend angegebenen Beziehung auch sowohl das Hohlrad als auch das Sonnenrad als Stufenräder ausgebildet sein können.

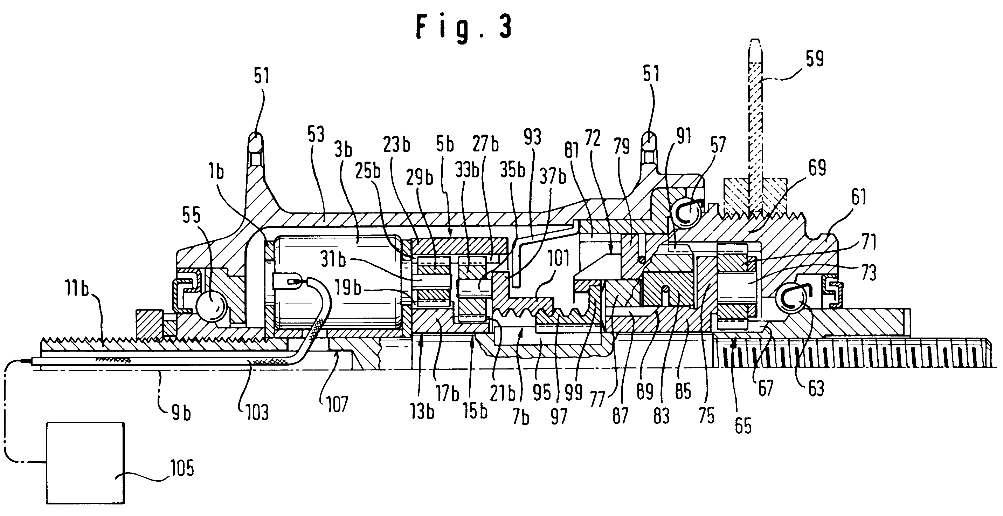

Fig. 3 zeigt eine elektrisch betätigbare Zweigang-Antriebsnabe für ein Fahrrad, die von einem Stellantrieb der insbesondere anhand Fig. 1 vorstehend erläuterten Art umschaltbar ist. Auch hier sind die Komponenten des Stellantriebs mit den Bezugszahlen der Fig. 1 bezeichnet und zur Unterscheidung mit dem Buchstaben b versehen. Zur Erläuterung des Aufbaus und der Wirkungsweise des Stellantriebs wird auf die vorangegangene Beschreibung Bezug genommen.

Die Getriebenabe umfaßt eine in üblicher Weise mit Speichenflanschen 51 versehene Nabenhülse 53, die an ihrem einen axialen Ende mittels eines Kugellagers 55 drehbar auf der die Antriebsnabe in der Rahmengabel des Fahrrads haltenden Achse 11b gelagert ist. An ihrem anderen Ende ist die Nabenhülse 53 über ein Kugellager 57 drehbar an einem mit einem Kettenrad 59 versehenen Antreiber 61 gelagert, der sich über ein Kugellager 63 seinerseits drehbar auf der Achse 11b abstützt.

Die Getriebenabe umfaßt ein Planetengetriebe 65 mit einem drehfest auf der Achse 11b sitzenden Sonnenrad 67 und einem am Antreiber 61 angeformten Hohlrad 69. Mit dem Sonnenrad 67 und dem Hohlrad 69 kämmen Planetenräder 71, die drehbar auf Achszapfen 73 eines seinerseits drehbar auf der Achse 11b gelagerten Planetenradträgers 75 gelagert sind. Bei Rotation des Antreibers 61 wird der Planetenradträger 75 ins Langsame übersetzt mitgenommen.

Die Nabenhülse 53 kann über ein steuerbares Klinkengesperre 72 wechselweise direkt mit dem Antreiber 61 oder für eine Berggangübersetzung der Antriebsbewegung mit dem Planetenradträger 75 gekuppelt werden. Das Klinkengesperre umfaßt einen auf der Achse 11b drehbar und axial verschiebbar geführten Klinkenträger 77 mit einem Satz nach radial außen abstehender Freilaufklinken 79, die in eine fest mit der Nabenhülse 53 verbundene Klinkenverzahnung 81 in beiden axialen Stellungen des Klinkentragers 77 federnd eingreifen. Nach radial innen stehen vom Klinkenträger 77 Klinken 83 ab, die in einer dem Antreiber 61 fernen Stellung des Klinkenträgers 77 in eine an einem Ansatz 85 des Planetenradträgers 75 vorgesehene Klinkenverzahnung 87 federnd eingreifen. In der in Fig. 3 dargestellten, dem Antreiber 61 nahegelegenen Stellung des Klinkenträgers 77 werden die Klinken 83 von einer Steuerschulter 89 aus der Klinkenverzahnung 87 herausgehalten. Der Klinkenträger 77 ist darüber hinaus mit einer Kupplungsverzahnung 91 versehen, die in der dem Antreiber nahegelegenen Stellung in die Hohlradverzahnung 69 des Antreibers 61 eingreift und in der antreiberfernen Stellung des Klinkenträgers 77 außer Eingriff kommt.

In der dem Antreiber 61 nahen Stellung des Klinkenträgers 77 ist der direkte Gang der Antriebsnabe eingeschaltet, und der Antreiber 61 treibt die Nabenhülse 53 mit nicht übersetzter Drehzahl direkt über seine Hohlradverzahnung 69, die Klauenverzahnung 91, die Freilaufklinken 79 und die Klinkenverzahnung 81 an. Die steuerbaren Klinken 83 sind aus ihrer Klinkenverzahnung 87 herausgehoben. Im Berggang, in der der Klinkenträger 77 in die dem Antreiber 61 ferne Stellung verschoben ist, verläuft der Antriebsweg vom Antreiber 61 über die Planetenräder 71, den Planetenradträger 85, die Klinkenverzahnung 87, die Klinken 83, die Klinken 79 und die Klinkenverzahnung zur 81 zur Nabenhülse 53.

Der Stellantrieb ist vollständig innerhalb der Nabenhülse 53 untergebracht. Der Elektromotor 3b ist über das Basisteil 1b an der Achse 11b drehfest befestigt und trägt auf seiner Motorwelle 31b das mit der Sonnenradverzahnung 19b und der Hohlradverzahnung 25b der Getriebestufe 13b kämmende Antriebsrad 29b. Das Sonnenrad 17b ist direkt auf der Achse 11b gelagert, während der Planetenradträger 37b der mit der Sonnenradverzahnung 21b und der Hohlradverzahnung 27b kämmenden Planetenräder 33b in nachfolgend erläuterter Weise indirekt an der Achse 11b radial geführt ist. Der Planetenradträger 37b trägt zumindest drei Planetenräder, die zugleich das Hohlrad 23b radial führen. Es versteht sich jedoch, daß das Hohlrad 23b gegebenenfalls auch am Innenmantel der Nabenhülse 53 radial geführt sein kann. In axialer Richtung ist das Hohlrad 23b einerseits an dem Basisteil 1b und andererseits an einem ringförmigen Anschlagteil 93 fixiert, welches an der Nabenhülse 53 befestigt ist. Das Anschlagteil 93 fixiert zugleich den Planetenradträger 37b auf der dem Motor 3b fernen Seite. Das Sonnenrad ist entsprechend Fig. 1 gestuft, so daß es die Drehzahl des Elektromotors 3b mit hohem Übersetzungsverhältnis in eine langsame Drehbewegung des Planetenradträgers 37b übersetzt.

Der Gewindetrieb 7b hat einen auf der Achse 11b mittels eines axialen Stegs 95 drehfest, aber axial verschiebbar geführten Gewindeteil 97, der mit einem nach radial außen abstehenden Ringflansch 99 drehbar, aber axial fest mit dem Klinkenträger 77 gekuppelt ist. An dem Planetenradträger 37b ist ein Spindelmutteransatz 101 angeformt, der den Planetenradträger drehbar auf dem Spindelteil 97 radial führt und den Spindelteil 97 längs der Achse 11b bei Drehung des Planetenradträgers 37b verstellt. Die Verstellbewegung wird auf den Klinkenträger 77 übertragen und schaltet das Klinkengesperre 71.

Der Elektromotor 3b ist über ein Kabel 103 mit einer an eine nicht näher dargestellte Stromquelle, beispielsweise eine Batterie oder dergleichen angeschlossenen Steuerschaltung 105 verbunden, wobei das Kabel 103 durch eine zentrische Bohrung 107 der Achse 11b aus der Nabenhülse 53 heraus zum Stirnende der Achse 11b geführt ist. Die Steuerschaltung 105 erlaubt es, den Motor 3b in beiden Drehrichtungen zu betreiben, und kann im einfachsten Fall auf zwei manuell zu bedienenden Steuertasten bestehen, die den Motor 3b für die Dauer ihrer Betätigung in entgegengesetzten Drehrichtungen einschalten. Um eine Überlastung des Motors zu verhindern, hat die Steuerschaltung zweckmäßigerweise ein nicht näher dargestelltes Zeitglied, das den Antriebsstrom des Motors 3b auf eine vorbestimmte Zeitspanne begrenzt, so daß dem Motor lediglich Antriebsstromimpulse vorbestimmter Zeitdauer zugeführt werden können.

Es versteht sich, daß der Stellantrieb auch bei anderen Antriebsnaben, insbesondere mit mehr als zwei Gängen, eingesetzt werden kann.

**Patentansprüche**

1. Stellantrieb, insbesondere zum Schalten eines Fahrrad-Antriebsgetriebes,
   **gekennzeichnet durch**
   - einen Elektromotor (3),
   - eine erste Getriebestufe (13) mit einem um eine Drehachse (9) drehbaren ersten Sonnenrad (19), einem zum ersten Sonnenrad (19) koaxialen, um die Drehachse (9) drehbaren ersten Hohlrad (25) und einem von dem Elektromotor (3) rotierend angetriebenen, mit dem ersten Sonnenrad (19) und dem ersten Hohlrad (25) kämmenden, stationär gelagerten Antriebsrad (29),
   - eine zweite Getriebestufe (15) mit einem drehfest mit dem ersten Sonnenrad (19) verbundenen und mit diesem um die Drehachse (9) drehbaren zweiten Sonnenrad (21), einem drehfest mit dem ersten Hohlrad (25) verbundenen und mit diesem um die Drehachse (9) drehbaren, zum zweiten Sonnenrad (21) koaxialen zweiten Hohlrad (27), einem relativ zum zweiten Sonnenrad (21) und zum zweiten Hohlrad (27) um die Drehachse (9) drehbaren Planetenradträger (37) und wenigstens einem drehbar an dem Planetenradträger (37) gelagerten, mit dem zweiten Sonnenrad (21) und dem zweiten Hohlrad (27) kämmenden Planetenrad (33), dessen Teilkreisdurchmesser größer ist als der Teilkreisdurchmesser des Antriebsrads (29) und
- ein mit dem Planetenradträger (37) verbundenes Abtriebsorgan (7).

2. Stellantrieb nach Anspruch 1, dadurch gekennzeichnet, daß das erste (25) und zweite (27) Hohlrad gleichen Teilkreisdurchmesser haben und der Teilkreisdurchmesser des zweiten Sonnenrads (21) kleiner ist als der Teilkreisdurchmesser des ersten Sonnenrads (19).

3. Stellantrieb nach Anspruch 2, dadurch gekennzeichnet, daß das zweite Sonnenrad (21) eine nur wenig kleinere Zähnezahl hat als das erste Sonnenrad (19).

4. Stellantrieb nach Anspruch 1, dadurch gekennzeichnet, daß das erste (19a) und zweite (21a) Sonnenrad gleichen Teilkreisdurchmesser haben und der Teilkreisdurchmesser des ersten Hohlrads (25a) kleiner ist als der Teilkreisdurchmesser des zweiten Hohlrads (27a).

5. Stellantrieb nach Anspruch 4, dadurch gekennzeichnet, daß das erste Hohlrad (25a) eine nur wenig kleinere Zähnezahl hat als das zweite Hohlrad (27a).

6. Stellantrieb nach einem der Ansprüche 1 bis 5, dadurch gekennzeichnet, daß der Elektromotor (3) eine achsparallel zur Drehachse (9) der Getriebestufen (13, 15) angeordnete Motorwelle (31) hat und das Antriebsrad (29) direkt auf der Motorwelle (31) sitzt.

7. Stellantrieb nach einem der Ansprüche 1 bis 5, dadurch gekennzeichnet, daß die beiden Hohlräder (25, 27) und/oder die beiden Sonnenräder (19, 21) jeweils integral miteinander verbunden sind.

8. Stellantrieb nach einem der Ansprüche 1 bis 7, dadurch gekennzeichnet, daß der Elektromotor (3), die Getriebestufen (13, 15) und das Abtriebsorgan (7) auf einer die Drehachse definierenden zentralen Achse (11) radial geführt sind.

9. Stellantrieb nach einem der Ansprüche 1 bis 8, dadurch gekennzeichnet, daß das Abtriebsorgan als Gewindetrieb (7) mit einem Spindelteil (39; 97) und einem mit dem Spindelteil (39; 97) verschraubbaren Mutterteil (43; 101) ausgebildet ist, wobei eines (39; 101) dieser Teile drehfest mit dem Planetenradträger (37) verbunden ist und das andere (43; 97) dieser Teile in Richtung der Drehachse (9) verschiebbar ist.

10. Stellantrieb nach einem der Ansprüche 1 bis 9, dadurch gekennzeichnet, daß der Elektromotor (3) als Gleichstrommotor ausgebildet ist.

11. Stellantrieb nach einem der Ansprüche 1 bis 10, dadurch gekennzeichnet, daß der Elektromotor (3b) mit einer Steuerschaltung (105) verbunden ist, über die er in beide Drehrichtungen einschaltbar ist.

12. Stellantrieb nach Anspruch 11, dadurch gekennzeichnet, daß die Steuerschaltung (105) für den Betrieb des Elektromotors (3b) in jeder der beiden Drehrichtungen einen Antriebsstromimpuls vorbestimmter Dauer erzeugt.

13. Schaltgetriebe-Antriebsradnabe für ein Zweiradfahrzeug, insbesondere ein Fahrrad, umfassend
   - eine Achse (11b),
   - eine drehbar an der Achse (11b) gelagerte Nabenhülse (53),
   - einen relativ zur Nabenhülse (53) drehbar an der Achse (11b) gelagerten Antreiber (61),
   - eine im Antriebsweg zwischen dem Antreiber (61) und der Nabenhülse (53) angeordnete, mehrgängige Planetengetriebeanordnung (65, 71), die mittels eines Steuerorgans (77) zwischen wenigstens zwei Gängen umschaltbar ist,
   **dadurch gekennzeichnet,** daß an der Achse (11b) ein innerhalb der Nabenhülse (53) angeordneter Stellantrieb nach einem der Ansprüche 1 bis 12 gelagert ist, dessen Abtriebsorgan (7b) mit dem Steuerorgan (77) verbunden ist.

14. Schaltgetriebe-Antriebsradnabe nach Anspruch 14, dadurch gekennzeichnet, daß das Steuerorgan (77) längs der Achse (11b) beweglich ist und der Planetenradträger (23b) über einen Gewindetrieb (7b) mit dem Steuerorgan (77) gekuppelt ist.

15. Schaltgetriebe-Antriebsradnabe nach Anspruch 13 oder 14, dadurch gekennzeichnet, daß die Achse (11b) eine Längsbohrung (107) enthält und in der Längsbohrung (107) eine Stromversorgungsleitung (103) des Elektromotors (3b) aus der Nabenhülse (53) herausgeführt ist.

# Fig.1

# Fig.2

Fig. 3

EP 0 537 693 A1

Europäisches
Patentamt

**EUROPÄISCHER RECHERCHENBERICHT**

Nummer der Anmeldung

EP    92 11 7488

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 065 983 (MIMURA) <br> * das ganze Dokument * <br> --- | 1,13 | B62M25/08 <br> B62M11/16 <br> F16H61/32 |
| A | DE-A-3 440 071 (FICHTEL & SACHS) <br> * das ganze Dokument * <br> --- | 1,13 | |
| A | GB-A-2 062 139 (FICHTEL & SACHS) <br> * das ganze Dokument * <br> --- | 1,13 | |
| A | FR-A-2 247 376 (STUHLMULLER ET ZAKARIAN) <br> * das ganze Dokument * <br> --- | 1,13 | |
| A | US-A-4 440 035 (FOULK) <br> * das ganze Dokument * <br> --- | 1,13 | |
| A | DE-A-2 743 649 (KLOOSTRE & ZONEN) <br> * das ganze Dokument * <br><br> ----- | 1,13 | |

|  |  |  | RECHERCHIERTE SACHGEBIETE (Int. Cl.5 ) |
|---|---|---|---|
|  |  |  | B62M <br> F16H |

Der vorliegende Recherchenbericht wurde für alle Patentansprüche erstellt

| Recherchenort | Abschlußdatum der Recherche | Prüfer |
|---|---|---|
| DEN HAAG | 21 JANUAR 1993 | DENICOLAI G. |